# EUROPEAN PATENT APPLICATION

(11) **EP 3 196 784 A1**
(43) Date of publication of application: **26.07.2017**
(21) Application number: 17151769.1
(22) Date of filing: 17.01.2017
(51) Int. Cl.: G06F 17/30

(54) **CONFIGURABLE DATABASE PLATFORM FOR UPDATING OBJECTS**

(30) Priority: 21.01.2016 US 201615003313
(71) Applicant: Salesforce.com, Inc., San Francisco CA 94105 (US)
(72) Inventor: SEMLANI, Latesh, Fremont, CA California 94536 (US); MODI, Ankit, San Francisco, CA California 94105 (US); DELURGIO, Marc, San Anselmo, CA California 96960 (US); SINGH, Atul, San Francisco CA California 94105 (US)
(74) Representative: Goddar, Heinz J.

(57) **Abstract**

An update platform (222) may update selectable objects (200) with content from selectable data sources (242) based on selectable trigger events (252). The update platform (222) may generate rules (250) that associate the different selected objects (200) with the different selected trigger events (252) and different selected data sources (242). The update platform (222) may monitor the trigger events (252) identified in the rules (250) and then update the objects (200) with information from the data sources (242) identified in the rules (250). The update platform (222) may provide perpetual real-time updates in response to detected object changes. The update platform (222) also may assign filters to the objects (200) that update records with selectable characteristics. The update platform (222) also may assign different priories to the data sources (242) so objects (200) are updated with more relevant information.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the United States Patent and Trademark Office patent file or records, but otherwise reserves all copyright rights whatsoever.

### TECHNICAL FIELD

The technology relates to updating objects in database systems.

### BACKGROUND

A user may enter data into a database system. For example, the user may enter names into different accounts, contacts, or leads. An administrator may preprogram the database system to periodically update the accounts, contacts, and leads with additional information extracted from an external data source. For example, the external data source may contain additional information associated with the names, such as addresses, phone numbers, companies, etc.

The database system may periodically search the external data source for the additional information. If found, the database system then may populate fields in the accounts, contacts, and leads with the additional addresses, phone numbers, and company information identified in the external data source.

The pre-programmed external data source may not contain the correct type of information for the object. For example, a user may want additional health care information associated with a lead but the external data source may only provide financial information. The database system also may only sporadically search the external data source. Therefore, the database system may not update the objects in time to benefit the user. The database system also may update all objects and replace data the user did not want updated.

### BRIEF DESCRIPTION OF THE DRAWINGS

The included drawings are for illustrative purposes and serve to provide examples of possible structures and operations for the disclosed inventive systems, apparatus, methods and computer-readable storage media. These drawings in no way limit any changes in form and detail that may be made by one skilled in the art without departing from the spirit and scope of the disclosed implementations.
Figure 1A shows a block diagram of an example environment in which an on-demand database service can be used according to some implementations.
Figure 1 B shows a block diagram of example implementations of elements of Figure 1A and example interconnections between these elements according to some implementations.
Figure 2 shows an example update platform operating in a database system.
Figure 3 shows the update platform of Figure 2 in more detail.
Figure 4 shows an example rule generator.
Figure 5 shows an example data map used by the rule generator.
Figure 6 shows an example process for updating objects.
Figure 7 shows an example process for sending an update request to a data source.

### DETAILED DESCRIPTION

Examples of systems, apparatus, computer-readable storage media, and methods according to the disclosed implementations are described in this section. These examples are being provided solely to add context and aid in the understanding of the disclosed implementations. It will thus be apparent to one skilled in the art that the disclosed implementations may be practiced without some or all of the specific details provided. In other instances, certain process or method operations, also referred to herein as "blocks," have not been described in detail in order to avoid unnecessarily obscuring the disclosed implementations. Other implementations and applications also are possible, and as such, the following examples should not be taken as definitive or limiting either in scope or setting.

In the following detailed description, references are made to the accompanying drawings, which form a part of the description and in which are shown, by way of illustration, specific implementations. Although these disclosed implementations are described in sufficient detail to enable one skilled in the art to practice the implementations, it is to be understood that these examples are not limiting, such that other implementations may be used and changes may be made to the disclosed implementations without departing from their spirit and scope. For example, the blocks of the methods shown and described herein are not necessarily performed in the order indicated in some other implementations. Additionally, in some other implementations, the disclosed methods may include more or fewer blocks than are described. As another example, some blocks described herein as separate blocks may be combined in some other implementations. Conversely, what may be described herein as a single block may be implemented in multiple blocks in some other implementations. Additionally, the conjunction "or" is intended herein in the inclusive sense where appropriate unless otherwise indicated; that is, the phrase "A, B or C" is intended to include the possibilities of "A," "B," "C," "A and B," "B and C," "A and C" and "A, B and C."

Some implementations described and referenced herein are directed to systems, apparatus, computer-implemented methods and computer-readable storage media for identifying articles helpful in resolving user queries.

A database system might display a case associated with a customer support query. The database system may initiate a search for other cases related to the new case. The database system may extract relevant terms from the title and/or description provided in the new case using a term weighting algorithm, such as more like this (MLT). The relevant terms are then used in a search query for identifying the related cases.

The database system identifies articles linked to the related cases, ranks the articles, and causes the articles to be displayed on a remote user system in an order based on the ranking. The database system may rank the articles based on a number of related cases linked to the articles. The database system also may rank the article based on other parameters, such as relevancy scores for the related cases, labels assigned to the cases, last modified dates of the related cases, etc.

The database system may identify more relevant articles by first finding related cases that use a similar vocabulary to describe similar customer problems. The database system then identifies the articles that were previously determined to help resolve the prior problems. Thus, the database system may bridge the gap between vocabularies used by customers to describe problems and vocabularies used in articles to describe solutions to those problems.

In some implementations, the users described herein are users (or "members") of an interactive online "enterprise social network," also referred to herein as an "enterprise social networking system," an "enterprise collaborative network," or more simply as an "enterprise network." Such online enterprise networks are increasingly becoming a common way to facilitate communication among people, any of whom can be recognized as enterprise users. One example of an online enterprise social network is Chatter®, provided by salesforce.com, inc. of San Francisco, California. salesforce.com, inc. is a provider of enterprise social networking services, customer relationship management (CRM) services and other database management services, any of which can be accessed and used in conjunction with the techniques disclosed herein in some implementations. These various services can be provided in a cloud computing environment as described herein, for example, in the context of a multi-tenant database system. Some of the described techniques or processes can be implemented without having to install software locally, that is, on computing devices of users interacting with services available through the cloud. While the disclosed implementations may be described with reference to Chatter® and more generally to enterprise social networking, those of ordinary skill in the art should understand that the disclosed techniques are neither limited to Chatter® nor to any other services and systems provided by salesforce.com, inc. and can be implemented in the context of various other database systems such as cloud-based systems that are not part of a multi-tenant database system or which do not provide enterprise social networking services.

### I. EXAMPLE SYSTEM OVERVIEW

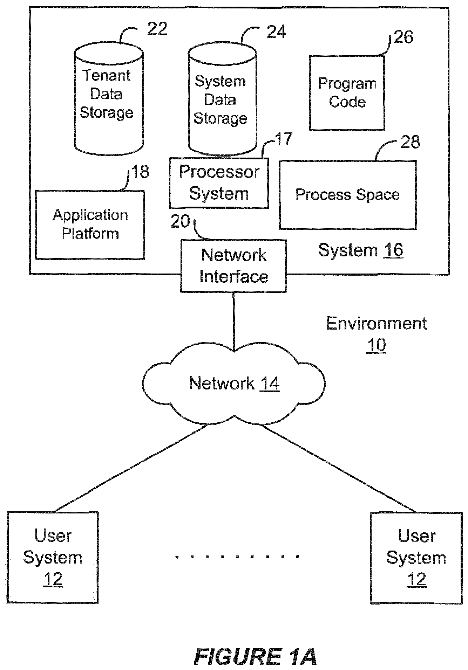

Figure 1A shows a block diagram of an example of an environment 10 in which an on-demand database service can be used in accordance with some implementations. The environment 10 includes user systems 12, a network 14, a database system 16 (also referred to herein as a "cloud-based system"), a processor system 17, an application platform 18, a network interface 20, tenant database 22 for storing tenant data 23, system database 24 for storing system data 25, program code 26 for implementing various functions of the system 16, and process space 28 for executing database system processes and tenant-specific processes, such as running applications as part of an application hosting service. In some other implementations, environment 10 may not have all of these components or systems, or may have other components or systems instead of, or in addition to, those listed above.

In some implementations, the environment 10 is an environment in which an on-demand database service exists. An on-demand database service, such as that which can be implemented using the system 16, is a service that is made available to users outside of the enterprise(s) that own, maintain or provide access to the system 16. As described above, such users generally do not need to be concerned with building or maintaining the system 16. Instead, resources provided by the system 16 may be available for such users' use when the users need services provided by the system 16; that is, on the demand of the users. Some on-demand database services can store information from one or more tenants into tables of a common database image to form a multi-tenant database system (MTS). The term "multi-tenant database system" can refer to those systems in which various elements of hardware and software of a database system may be shared by one or more customers or tenants. For example, a given application server may simultaneously process requests for a great number of customers, and a given database table may store rows of data such as feed items for a potentially much greater number of customers. A database image can include one or more database objects. A relational database management system (RDBMS) or the equivalent can execute storage and retrieval of information against the database object(s).

Application platform 18 can be a framework that allows the applications of system 16 to execute, such as the hardware or software infrastructure of the system 16. In some implementations, the application platform 18 enables the creation, management and execution of one or more applications developed by the provider of the on-demand database service, users accessing the on-demand database service via user systems 12, or third party application developers accessing the on-demand database service via user systems 12.

In some implementations, the system 16 implements a web-based customer relationship management (CRM) system. For example, in some such implementations, the system 16 includes application servers configured to implement and execute CRM software applications as well as provide related data, code, forms, renderable web pages and documents and other information to and from user systems 12 and to store to, and retrieve from, a database system related data, objects, and Web page content. In some MTS implementations, data for multiple tenants may be stored in the same physical database object in tenant database 22. In some such implementations, tenant data is arranged in the storage medium(s) of tenant database 22 so that data of one tenant is kept logically separate from that of other tenants so that one tenant does not have access to another tenant's data, unless such data is expressly shared. The system 16 also implements applications other than, or in addition to, a CRM application. For example, the system 16 can provide tenant access to multiple hosted (standard and custom) applications, including a CRM application. User (or third party developer) applications, which may or may not include CRM, may be supported by the application platform 18. The application platform 18 manages the creation and storage of the applications into one or more database objects and the execution of the applications in one or more virtual machines in the process space of the system 16.

According to some implementations, each system 16 is configured to provide web pages, forms, applications, data and media content to user (client) systems 12 to support the access by user systems 12 as tenants of system 16. As such, system 16 provides security mechanisms to keep each tenant's data separate unless the data is shared. If more than one MTS is used, they may be located in close proximity to one another (for example, in a server farm located in a single building or campus), or they may be distributed at locations remote from one another (for example, one or more servers located in city A and one or more servers located in city B). As used herein, each MTS could include one or more logically or physically connected servers distributed locally or across one or more geographic locations. Additionally, the term "server" is meant to refer to a computing device or system, including processing hardware and process space(s), an associated storage medium such as a memory device or database, and, in some instances, a database application (for example, OODBMS or RDBMS) as is well known in the art. It should also be understood that "server system" and "server" are often used interchangeably herein. Similarly, the database objects described herein can be implemented as part of a single database, a distributed database, a collection of distributed databases, a database with redundant online or offline backups or other redundancies, etc., and can include a distributed database or storage network and associated processing intelligence.

The network 14 can be or include any network or combination of networks of systems or devices that communicate with one another. For example, the network 14 can be or include any one or any combination of a LAN (local area network), WAN (wide area network), telephone network, wireless network, cellular network, point-to-point network, star network, token ring network, hub network, or other appropriate configuration. The network 14 can include a TCP/IP (Transfer Control Protocol and Internet Protocol) network, such as the global internetwork of networks often referred to as the "Internet" (with a capital "I"). The Internet will be used in many of the examples herein. However, it should be understood that the networks that the disclosed implementations can use are not so limited, although TCP/IP is a frequently implemented protocol.

The user systems 12 can communicate with system 16 using TCP/IP and, at a higher network level, other common Internet protocols to communicate, such as HTTP, FTP, AFS, WAP, etc. In an example where HTTP is used, each user system 12 can include an HTTP client commonly referred to as a "web browser" or simply a "browser" for sending and receiving HTTP signals to and from an HTTP server of the system 16. Such an HTTP server can be implemented as the sole network interface 20 between the system 16 and the network 14, but other techniques can be used in addition to or instead of these techniques. In some implementations, the network interface 20 between the system 16 and the network 14 includes load sharing functionality, such as round-robin HTTP request distributors to balance loads and distribute incoming HTTP requests evenly over a number of servers. In MTS implementations, each of the servers can have access to the MTS data; however, other alternative configurations may be used instead.

The user systems 12 can be implemented as any computing device(s) or other data processing apparatus or systems usable by users to access the database system 16. For example, any of user systems 12 can be a desktop computer, a work station, a laptop computer, a tablet computer, a handheld computing device, a mobile cellular phone (for example, a "smartphone"), or any other Wi-Fi-enabled device, wireless access protocol (WAP)-enabled device, or other computing device capable of interfacing directly or indirectly to the Internet or other network. The terms "user system" and "computing device" are used interchangeably herein with one another and with the term "computer." As described above, each user system 12 typically executes an HTTP client, for example, a web browsing (or simply "browsing") program, such as a web browser based on the WebKit platform, Microsoft's Internet Explorer browser, Apple's Safari, Google's Chrome, Opera's browser, or Mozilla's Firefox browser, , or the like, allowing a user (for example, a subscriber of on-demand services provided by the system 16) of the user system 12 to access, process and view information, pages and applications available to it from the system 16 over the network 14.

Each user system 12 also typically includes one or more user input devices, such as a keyboard, a mouse, a trackball, a touch pad, a touch screen, a pen or stylus or the like, for interacting with a graphical user interface (GUI) provided by the browser on a display (for example, a monitor screen, liquid crystal display (LCD), light-emitting diode (LED) display, among other possibilities) of the user system 12 in conjunction with pages, forms, applications and other information provided by the system 16 or other systems or servers. For example, the user interface device can be used to access data and applications hosted by system 16, and to perform searches on stored data, and otherwise allow a user to interact with various GUI pages that may be presented to a user. As discussed above, implementations are suitable for use with the Internet, although other networks can be used instead of or in addition to the Internet, such as an intranet, an extranet, a virtual private network (VPN), a non-TCP/IP based network, any LAN or WAN or the like.

The users of user systems 12 may differ in their respective capacities, and the capacity of a particular user system 12 can be entirely determined by permissions (permission levels) for the current user of such user system. For example, where a salesperson is using a particular user system 12 to interact with the system 16, that user system can have the capacities allotted to the salesperson. However, while an administrator is using that user system 12 to interact with the system 16, that user system can have the capacities allotted to that administrator. Where a hierarchical role model is used, users at one permission level can have access to applications, data, and database information accessible by a lower permission level user, but may not have access to certain applications, database information, and data accessible by a user at a higher permission level. Thus, different users generally will have different capabilities with regard to accessing and modifying application and database information, depending on the users' respective security or permission levels (also referred to as "authorizations").

According to some implementations, each user system 12 and some or all of its components are operator-configurable using applications, such as a browser, including computer code executed using a central processing unit (CPU) such as an Intel Pentium® processor or the like. Similarly, the system 16 (and additional instances of an MTS, where more than one is present) and all of its components can be operator-configurable using application(s) including computer code to run using the processor system 17, which may be implemented to include a CPU, which may include an Intel Pentium® processor or the like, or multiple CPUs.

The system 16 includes tangible computer-readable media having non-transitory instructions stored thereon/in that are executable by or used to program a server or other computing system (or collection of such servers or computing systems) to perform some of the implementation of processes described herein. For example, computer program code 26 can implement instructions for operating and configuring the system 16 to intercommunicate and to process web pages, applications and other data and media content as described herein. In some implementations, the computer code 26 can be downloadable and stored on a hard disk, but the entire program code, or portions thereof, also can be stored in any other volatile or non-volatile memory medium or device as is well known, such as a ROM or RAM, or provided on any media capable of storing program code, such as any type of rotating media including floppy disks, optical discs, digital versatile disks (DVD), compact disks (CD), microdrives, and magneto-optical disks, and magnetic or optical cards, nanosystems (including molecular memory ICs), or any other type of computer-readable medium or device suitable for storing instructions or data. Additionally, the entire program code, or portions thereof, may be transmitted and downloaded from a software source over a transmission medium, for example, over the Internet, or from another server, as is well known, or transmitted over any other existing network connection as is well known (for example, extranet, VPN, LAN, etc.) using any communication medium and protocols (for example, TCP/IP, HTTP, HTTPS, Ethernet, etc.) as are well known. It will also be appreciated that computer code for the disclosed implementations can be realized in any programming language that can be executed on a server or other computing system such as, for example, C, C++, HTML, any other markup language, Java™, JavaScript, ActiveX, any other scripting language, such as VBScript, and many other programming languages as are well known may be used. (Java™ is a trademark of Sun Microsystems, Inc.).

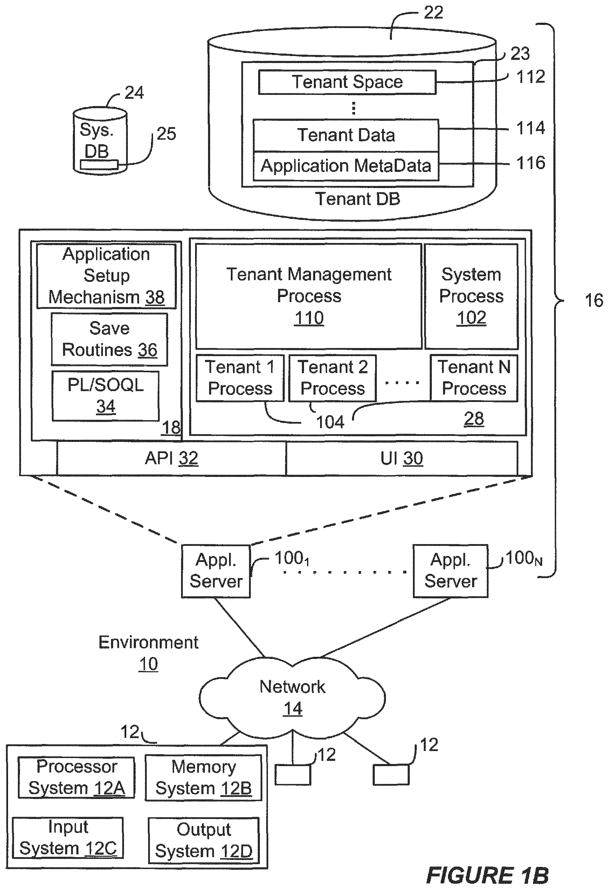

Figure 1B shows a block diagram of example implementations of elements of Figure 1A and example interconnections between these elements according to some implementations. That is, Figure 1B also illustrates environment 10, but Figure 1B, various elements of the system 16 and various interconnections between such elements are shown with more specificity according to some more specific implementations. Additionally, in Figure 1B, the user system 12 includes a processor system 12A, a memory system 12B, an input system 12C, and an output system 12D. The processor system 12A can include any suitable combination of one or more processors. The memory system 12B can include any suitable combination of one or more memory devices. The input system 12C can include any suitable combination of input devices, such as one or more touchscreen interfaces, keyboards, mice, trackballs, scanners, cameras, or interfaces to networks. The output system 12D can include any suitable combination of output devices, such as one or more display devices, printers, or interfaces to networks.

In Figure 1B, the network interface 20 is implemented as a set of HTTP application servers 100₁-100_{N}. Each application server 100, also referred to herein as an "app server", is configured to communicate with tenant database 22 and the tenant data 23 therein, as well as system database 24 and the system data 25 therein, to serve requests received from the user systems 12. The tenant data 23 can be divided into individual tenant storage spaces 112, which can be physically or logically arranged or divided. Within each tenant storage space 112, user storage 114 and application metadata 116 can similarly be allocated for each user. For example, a copy of a user's most recently used (MRU) items can be stored to user storage 114. Similarly, a copy of MRU items for an entire organization that is a tenant can be stored to tenant storage space 112.

The process space 28 includes system process space 102, individual tenant process spaces 104 and a tenant management process space 110. The application platform 18 includes an application setup mechanism 38 that supports application developers' creation and management of applications. Such applications and others can be saved as metadata into tenant database 22 by save routines 36 for execution by subscribers as one or more tenant process spaces 104 managed by tenant management process 110, for example. Invocations to such applications can be coded using PL/SOQL 34, which provides a programming language style interface extension to API 32. A detailed description of some PL/SOQL language implementations is discussed in commonly assigned U.S. Patent No. 7,730,478, titled METHOD AND SYSTEM FOR ALLOWING ACCESS TO DEVELOPED APPLICATIONS VIA A MULTI-TENANT ON-DEMAND DATABASE SERVICE, by Craig Weissman, issued on June 1, 2010, and hereby incorporated by reference in its entirety and for all purposes. Invocations to applications can be detected by one or more system processes, which manage retrieving application metadata 116 for the subscriber making the invocation and executing the metadata as an application in a virtual machine.

The system 16 of Figure 1B also includes a user interface (UI) 30 and an application programming interface (API) 32 to system 16 resident processes to users or developers at user systems 12. In some other implementations, the environment 10 may not have the same elements as those listed above or may have other elements instead of, or in addition to, those listed above.

Each application server 100 can be communicably coupled with tenant database 22 and system database 24, for example, having access to tenant data 23 and system data 25, respectively, via a different network connection. For example, one application server 100₁ can be coupled via the network 14 (for example, the Internet), another application server 100_{N-1} can be coupled via a direct network link, and another application server 100_{N} can be coupled by yet a different network connection. Transfer Control Protocol and Internet Protocol (TCP/IP) are examples of typical protocols that can be used for communicating between application servers 100 and the system 16. However, it will be apparent to one skilled in the art that other transport protocols can be used to optimize the system 16 depending on the network interconnections used.

In some implementations, each application server 100 is configured to handle requests for any user associated with any organization that is a tenant of the system 16. Because it can be desirable to be able to add and remove application servers 100 from the server pool at any time and for various reasons, in some implementations there is no server affinity for a user or organization to a specific application server 100. In some such implementations, an interface system implementing a load balancing function (for example, an F5 Big-IP load balancer) is communicably coupled between the application servers 100 and the user systems 12 to distribute requests to the application servers 100. In one implementation, the load balancer uses a least-connections algorithm to route user requests to the application servers 100. Other examples of load balancing algorithms, such as round robin and observed-response-time, also can be used. For example, in some instances, three consecutive requests from the same user could hit three different application servers 100, and three requests from different users could hit the same application server 100. In this manner, by way of example, system 16 can be a multi-tenant system in which system 16 handles storage of, and access to, different objects, data and applications across disparate users and organizations.

In one example storage use case, one tenant can be a company that employs a sales force where each salesperson uses system 16 to manage aspects of their sales. A user can maintain contact data, leads data, customer follow-up data, performance data, goals and progress data, etc., all applicable to that user's personal sales process (for example, in tenant database 22). In an example of a MTS arrangement, because all of the data and the applications to access, view, modify, report, transmit, calculate, etc., can be maintained and accessed by a user system 12 having little more than network access, the user can manage his or her sales efforts and cycles from any of many different user systems. For example, when a salesperson is visiting a customer and the customer has Internet access in their lobby, the salesperson can obtain critical updates regarding that customer while waiting for the customer to arrive in the lobby.

While each user's data can be stored separately from other users' data regardless of the employers of each user, some data can be organization-wide data shared or accessible by several users or all of the users for a given organization that is a tenant. Thus, there can be some data structures managed by system 16 that are allocated at the tenant level while other data structures can be managed at the user level. Because an MTS can support multiple tenants including possible competitors, the MTS can have security protocols that keep data, applications, and application use separate. Also, because many tenants may opt for access to an MTS rather than maintain their own system, redundancy, up-time, and backup are additional functions that can be implemented in the MTS. In addition to user-specific data and tenant-specific data, the system 16 also can maintain system level data usable by multiple tenants or other data. Such system level data can include industry reports, news, postings, and the like that are sharable among tenants.

In some implementations, the user systems 12 (which also can be client systems) communicate with the application servers 100 to request and update system-level and tenant-level data from the system 16. Such requests and updates can involve sending one or more queries to tenant database 22 or system database 24. The system 16 (for example, an application server 100 in the system 16) can automatically generate one or more SQL statements (for example, one or more SQL queries) designed to access the desired information. System database 24 can generate query plans to access the requested data from the database. The term "query plan" generally refers to one or more operations used to access information in a database system.

Each database can generally be viewed as a collection of objects, such as a set of logical tables, containing data fitted into predefined or customizable categories. A "table" is one representation of a data object, and may be used herein to simplify the conceptual description of objects and custom objects according to some implementations. It should be understood that "table" and "object" may be used interchangeably herein. Each table generally contains one or more data categories logically arranged as columns or fields in a viewable schema. Each row or element of a table can contain an instance of data for each category defined by the fields. For example, a CRM database can include a table that describes a customer with fields for basic contact information such as name, address, phone number, fax number, etc. Another table can describe a purchase order, including fields for information such as customer, product, sale price, date, etc. In some MTS implementations, standard entity tables can be provided for use by all tenants. For CRM database applications, such standard entities can include tables for case, account, contact, lead, and opportunity data objects, each containing pre-defined fields. As used herein, the term "entity" also may be used interchangeably with "object" and "table."

In some MTS implementations, tenants are allowed to create and store custom objects, or may be allowed to customize standard entities or objects, for example by creating custom fields for standard objects, including custom index fields. Commonly assigned U.S. Patent No. 7,779,039, titled CUSTOM ENTITIES AND FIELDS IN A MULTI-TENANT DATABASE SYSTEM, by Weissman et al., issued on August 17, 2010, and hereby incorporated by reference in its entirety and for all purposes, teaches systems and methods for creating custom objects as well as customizing standard objects in a multi-tenant database system. In some implementations, for example, all custom entity data rows are stored in a single multi-tenant physical table, which may contain multiple logical tables per organization. It is transparent to customers that their multiple "tables" are in fact stored in one large table or that their data may be stored in the same table as the data of other customers.

### II. UPDATE PLATFORM

An update platform may update selectable objects with content from selectable data sources based on selectable trigger events. The update platform may generate rules that associate the different selected objects with the different selected trigger events and different selected data sources. The update platform may monitor the trigger events identified in the rules and then update the objects with information from the data sources identified in the rules. The update platform may provide perpetual real-time updates in response to detected object changes. The update platform also may assign filters to the objects that update records with selectable characteristics. The update platform also may assign different priories to the data sources so objects are updated with more relevant information.

The following description refers to updating objects however the term update may refer to replacing information that currently exists in the objects, adding new information that does not currently exist in the objects, or any other enhancement to information stored in the objects. Further the objects referred to below may include any record, field, table, column, row, or any other data item that may by stored and updated in database system 16.

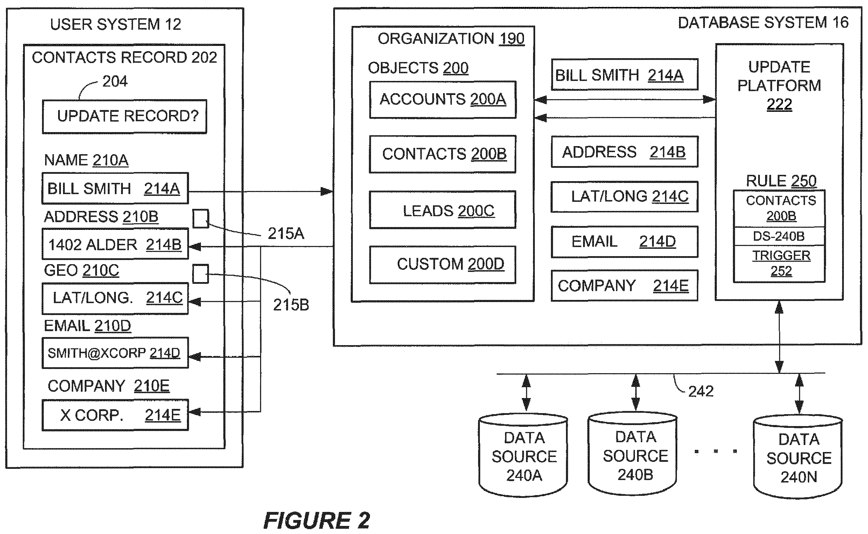

Figure 2 shows an example update platform 222 operating in database system 16. Any combination of servers, processors, memory, software, logic etc. in database system 16 may implement update platform 222. A user may access database system 16 via user system 12 as described above. In one example, the user is any person authorized to access an organization 190 of objects 200 stored in database system 16. For example, the user may be a salesman that stores information about different customers or the user may be a system administrator that manages and configures organization 190 in database system 16. In another example, the user may be an information technologist (IT) that manages and configures database system 16.

Organization 190 may be any tenant, business, entity, etc. associated with objects 200. In one example, a tenant may include a group of users who share a common access with specific privileges to a software instance. A multi-tenant architecture may provide a tenant with a dedicated share of the software instance typically including one or more of tenant specific data, user management, tenant-specific functionality, configuration, customizations, non-functional properties, associated applications, etc.

In one example, objects 200 may include an accounts object 200A, a contacts object 200B, a leads object 200C, and a custom object 200D. Of course these are just examples and objects 200 may include any type of data or data structure for any type of information.

The user on user system 12 may configure update platform 222 to automatically update objects 200 with information from data sources 240. Data sources 240 may include any database or any other type of structured or unstructured data that provides update information for objects 200. For example, a first data source 240A may include business and financial information, such as from a Dunn and Bradstreet® database. A second data source 240B may store contact information, such as from an on-line directory database.

Another data source 240 may include geographical (GEO) latitude and longitude (Lat/Long) data. Other data sources 240 may provide industry specific information, such medical information that may identify the number of beds and employees for different hospitals. In other examples, data sources 240 may include information from social networks or social media that include different user profiles. In another example, data sources 240 may refer to internal data sources, such as data from objects 200. For example, a user may want to update a record 202 with content from other previously populated objects 200.

Update platform 222 may access data sources 240 through any type of network 242, such as any combination of internal and/or external wide area networks (WANs), local area networks (LANs), or any other network referred to generally as the Internet. In one example, database platform 222 may use API calls to access external data sources 240. In another example, some data sources 240 may store data locally in database system 16 and update platform 222 may access the locally stored data.

Update platform 222 may create rules 250 that associate selectable objects 200 with selectable data sources 240 and selectable trigger events 252. For example, update platform 222 may create a rule 250 that associates contacts object 200B with data source 240B and trigger event 252. In this example, update platform 222 may update contacts object 200B with data from data source 240B in response to detecting trigger event 252. Trigger events 252 are described in more detail below.

After creating rule 250, a user may access objects 200 via user system 12 and either create a new record 202, edit an existing record 202, or simply view an existing record 202. For example, the user may enter a name Bill Smith into a name field 210A of record 202. In another example, the user may edit an existing name in name field 210A to Bill Smith.

Update platform 222 monitors object 200B and detects change in name field 210A. Update platform 222 searches for any rules 250 associated with the name change. In this example, update platform 222 determines rule 250 is associated with contacts records 202 and a trigger 252 for creating or editing contact records 202. Update platform 222 searches data source 240B identified in rule 250 for any data associated with Bill Smith. In this example, update platform 222 accesses data source 240B and identifies an address 214B, Lat/Long data 214C, email address 214D, and a company name 214E.

Update platform 222 orchestrates updates between different data sources 240. For example, update platform 222 may use data source 240A for updating address field 210B and use a second data source 240B for updating geo field 210C. In this example, the user may create multiple rules 250 for trigger event 252. Update platform 222 searches data sources 240 associated with the additional rules 250 to update other portions of record 202.

As mentioned above, a rule 250 also may cause update platform 222 to update record 202 with data from internal accounts 200A, contacts 200B, leads 200C, and/or custom objects 200D. For example, a user may create a custom object 200D that includes custom fields. The user can create a rule 250 that updates the custom fields in custom object 200D with data from objects 200A, 200B, and/or 200C.

Update platform 222 may display an on-demand update icon 204 in record 202. In response to a user selecting icon 204, update platform 222 may update record 202 with content from data sources 240 independently of any changes to fields 210.

In a stare and compare operation, update platform 222 may allow the user to view and compare data retrieved from data sources 240 with data currently stored in fields 210. The user may choose to update certain fields 210 with data 214 from data sources 240, or may choose to abort updates to certain fields 210.

In another example, a rule that triggers updates from one data source 240 also may cause another rule 250 to trigger updates from another data source 240. For example, a user may create or edit the name of a company in field 210E. The new company name may trigger a first rule to update the company address field 210B with address data from data source 240A. The updated company address may trigger a second rule to update Geo field 210C with Lat/Long data from data source 240B.

Update platform 222 also may indicate if fields 210 are up to date with particular data sources 240. For example, update platform 222 may display a status indicator 215A indicating address 214B in field 210B is up to date with data source 240A and display a status indicator 215B indicating Lat/Long data 214C in Geo field 210C is up to date with data source 240B.

Rules 250 enable a user to select any data source 240 for updating any selectable object 200 in response to any selectable trigger event 252. Rules 250 also enable update platform 222 to perpetually update objects 200 in real-time to provide more up to date information than weekly bulk update operations.

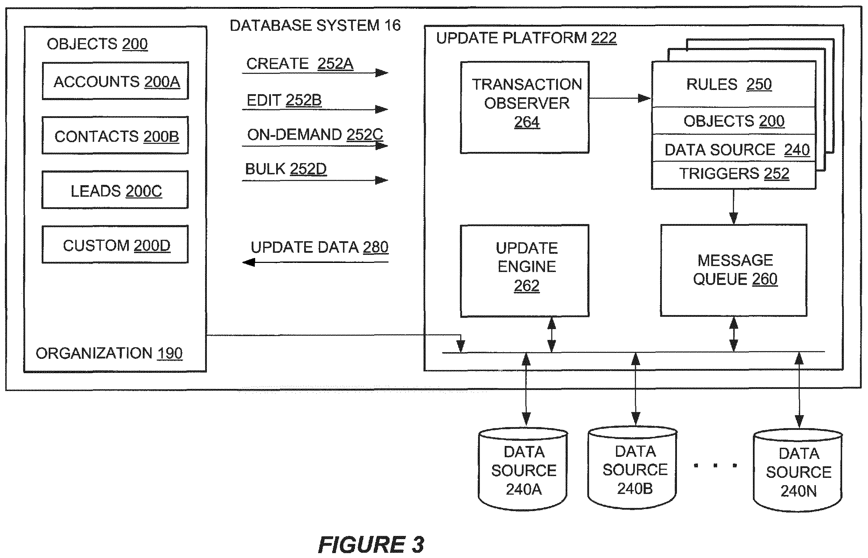

Figure 3 shows update platform 222 in more detail. As mentioned above, update platform 222 may store rules 250 configured by users to select different data sources 240 for updating selectable objects 200 based on selectable triggers 252.

Each rule 250 also may identify one or more trigger events 252 for initiating the update. Some example trigger events 252 may include a create trigger 252A, an edit trigger 252B, an on-demand trigger 252C, and/or a bulk trigger 252D. Create trigger 252A may initiate an update when a user creates a new record within one of objects 200 and edit trigger 252B may initiate an update when the user edits an existing record within one of objects 200. In one example, update platform 222 may initiate the update after the user saves the newly created or edited record. On-demand trigger 252D may initiate an update when a user manually selects update icon 204 as shown above in Figure 2.

Bulk trigger 252D may initiate updates based on a user selectable time period. In one example, bulk trigger 252D may perform a bulk update for all objects 200 within organization 190, for all records within a selectable object 200, or for selectable records within selectable objects 200.

A transaction observer 264 may monitor objects 200 for trigger events 252 identified in rules 250. Update platform 222 searches for rules 250 associated with detected trigger events 252 and the data sources 240 identified in the rules 250. Update platform 222 then loads messages into a message queue 260 directed to the identified data sources 240. For example, update platform 222 may place API calls on message queue 260 that access data sources 240. An update engine 262 receives data back from the API calls for updating objects 200.

Update platform 222 may update objects 200 based on inputs for data sources 240. For example, the user may update a record in leads object 200C. Transaction observer 264 may identify a rule 250 associated with leads object 200C identifying data source 240A. Transaction observer 264 may determine if the changes in leads object 200C correspond with inputs for data source 240A. If so, update platform 222 places a message in message queue 260 requesting data from data source 240A.

In another example, update platform 222 may periodically initiate bulk updates. In response to a clock that initiates bulk trigger 252D, update platform 222 may split records for organization 190 may into blocks. The blocks may be further split into batches based on the number of records data sources 240 can support in API calls. Messages for each batch are loaded onto message queue 260. When the messages are de-queued, the changed record data is used as inputs for the API calls. If a match is found in data source 240, update engine 262 may use the API results for updating objects 200 and then mark the update records with a SYNC status. If no match is found, update engine 262 may mark the records as match NOT_FOUND.

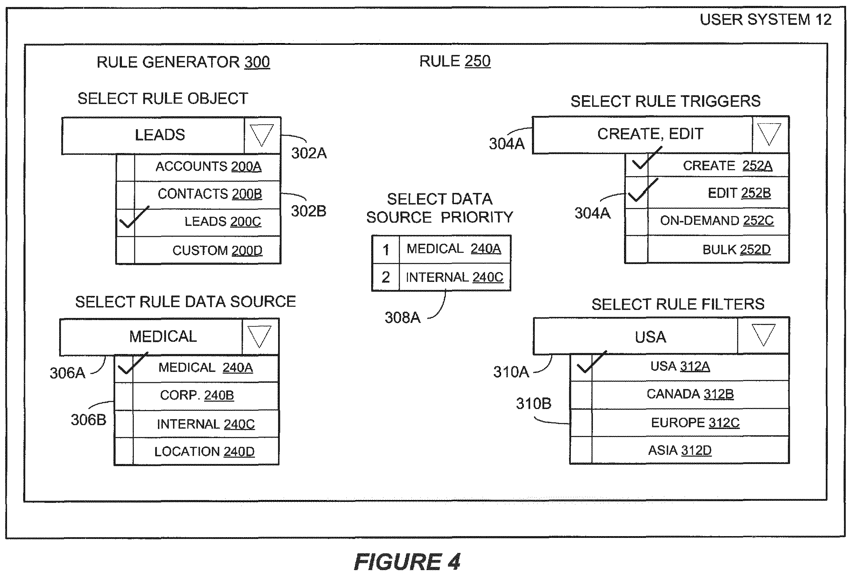

Figure 4 shows an example rule generator 300 used by the update platform. Rule generator 300 may create update rules 250 described above in FIGS. 2 and 3. Rule generator 300 is just one example user interface for selecting different data sources, objects, and triggers for rules 250.

Rule generator 300 may display a first icon 302A for selecting different objects 200. The user may select any object 200 identified in a drop down menu 302B. In this example, the user may select leads object 200C.

Rule generator 300 may display an icon 304A for selecting different trigger events 252 for the objects selected in icon 302A. For example, the user may select any combination of create trigger 252A, edit trigger 252B, on-demand trigger 252C, and/or bulk trigger 252D. In this example, the user may select create trigger 252A and edit trigger 252B.

Rule generator 300 may display an icon 306A for selecting a data source for updating the object selected in icon 302A. For example, the database system may identify four different available data sources including a medical data source 240A, a corporate data source 240B, an internal data source 240C, and a location data source 240D. As explained above, internal data source 240C may include one or more selectable objects 200. In this example, the user may select medical data source 240A. In one example, selecting certain data sources 240 may further prompt the user to execute a lease agreement prior to accessing the information in the selected data sources.

Rule generator 300 may display an icon 308A for selecting data source priorities. For example, the user may select medial data source 240A as a top priority and select internal data source 240C as a second priority. The update platform may update the object 200 selected in icon 302A based on the priorities selected in icon 308A. For example, the update platform may first use data from medical data source 240A to update leads object 200C. The update platform may use internal data source 240C identified in another rule to update leads object 200C with information not provided by medical data source 240A.

Rule generator 300 may display a filter icon 310A with a drop down menu 310B listing different filters 312. In this example, filters 312 identify different geographic regions, such as the United States 312A, Canada 312B, Europe 312C, and Asia 312D. However, rule generator 300 may provide filters 312 for any data parameter.

Records in leads object 200C may contain different geographical information. For example, some records in leads object 200C may contain addresses for companies located in Canada and some records may contain addresses for companies located in the United States.

In this example, the user selects USA filter 312A from drop down menu 310B. As explained above, the user previously selected medical data source 240A for rule 250. Accordingly, during an update operation, the update platform may update records in leads object 200C with a United States address with data from medical data source 240A. Records without United States addresses are not updated. The user may create other rules 250 that identify other data sources 204 and other filters 312. For example, the user may create another rule 250 that updates the records with Canadian addresses with data from a different data source 240.

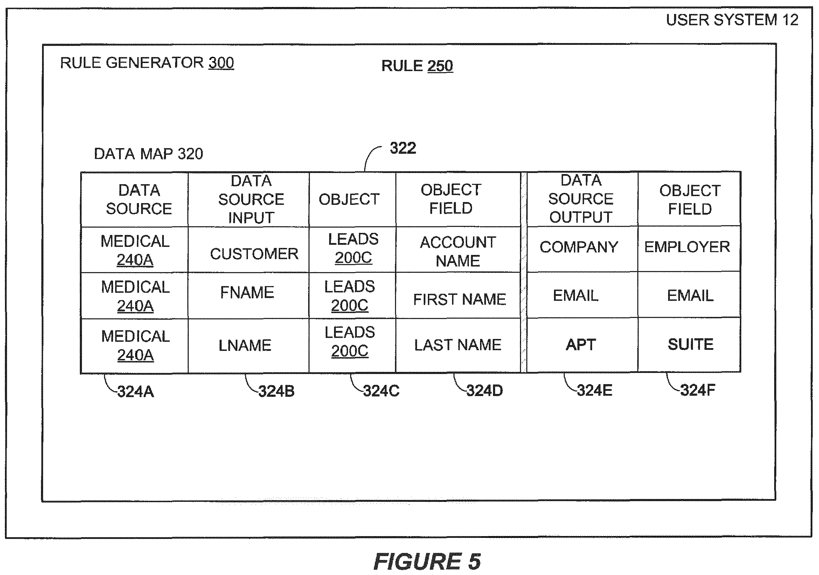

Figure 5 depicts an example data map. The update platform may use data map 320 to link inputs and outputs for different data sources 240 with the fields in different objects 200. Data map 320 may include a table 322 with a first column 324A identifying the data source 240 selected by the user for rule 250. A second column 324B may identify the inputs for the data source listed in column 324A. For example, medical data source 240A may include a customer input, a fname input, and a Iname input in column 324B.

Table 322 may include a third column 324C identifying the object 200 selected by the user for updating. For example, the user may have selected leads object 200C for rule 250. The user may enter field names into column 324D that map to data source inputs in column 324B. As mentioned above, medical data source 240A may define three inputs as "customer," "fname," and "lname." However, leads object 200C may define corresponding field names as "account name," "first name," and "last name," respectively. Table 322 maps the input names for medical data source 240A with the corresponding field names in leads object 200C.

Table 322 may include a column 324E that identifies the names of data source outputs. The user may enter field names into column 324F mapping to the data source outputs in column 324E. For example, the user may map "company", "email", and "apt" outputs for medical data source 240A with "employer", "email", and "suite" fields in leads object 200C.

The update platform may update objects based on the mappings in table 322. For example, the update platform may use the "account name" in column 324D for leads object 200C as the "customer" input in column 324B for medical data source 240A. The update platform also may use the "apt" output from medical data source 240 for updating the "suite" field of leads object 200C.

If the user removes a field name from column 324F, the update platform may not populate that field from data source 240A. Alternatively, the user may add flags to column 324F that direct the update platform not to update selected fields with content from data source 240A.

The update platform may automatically display inputs in column 324B and outputs in column 324E for medical data source 240A. The update platform also may attempt to initially map the input and outputs for data source 240A with fields for object 200C in columns 324D and 324F, respectively. The user then may modify entries in any column 324 with other mappings.

Thus, data map 320 enables the user to select which fields in objects 200 to use as inputs for data sources 240 and which outputs from data sources 240 to use for updating fields in objects 200.

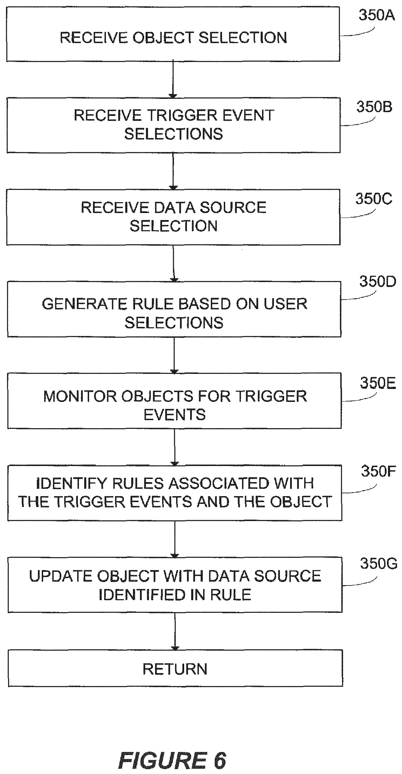

Figure 6 depicts an example update process. In operation 350A, the update platform may detect a user selecting an object via the rule generator user interface (UI). In operation 350B, the update platform may receive user inputs via the rule generator UI selecting one or more trigger events for initiating the updates. For example, the rule generator may receive user inputs selecting the edit trigger, create trigger, on-demand trigger, and/or bulk trigger.

In operation 350C, the update platform may receive a user input via the rule generator UI selecting a data source. In operation 350D, the update platform may generate a rule based on the user selections. For example, the update platform may generate a rule to update a contacts object with a social media data source whenever a user creates or edits a record.

In operation 350E, the update platform monitors the objects for the selected trigger events. For example, the update platform may monitor the objects in the database for new records or updates to existing records. The update platform also may monitor a clock for bulk update triggers and monitor user inputs for on-demand triggers.

If a trigger event is detected in operation 350E, the update platform in operation 350F searches for any rules associated with the trigger event and the object. For example, the update platform may detect a trigger event where a field is modified in the contacts object. The update platform identifies the rules associated with the trigger event and the contacts object. In this example, one of the rules identifies the social media data source.

In operation 350G, the update platform may update the object with the data sources identified in the rules. For example, the update platform may populate fields in the contacts record with information from the social media data source, such as address data, employer data, location data, etc.

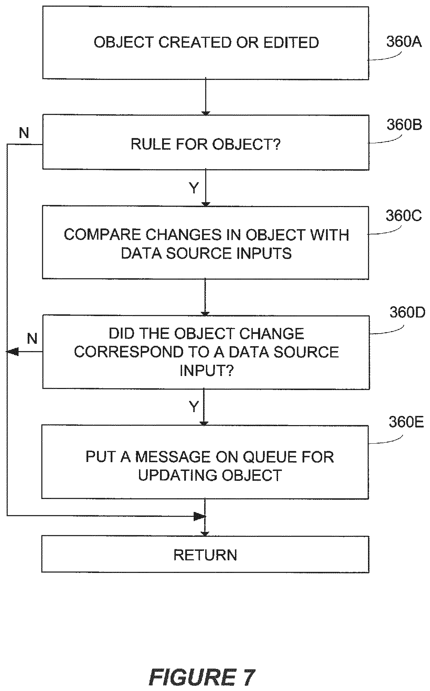

Figure 7 depicts a process for accessing data sources. As mentioned above, the update platform may use a specific set of inputs in a API call to access a data source. The update platform may not need to access the data source when the changes to the object are not data source inputs. In other words, if inputs to a data source do not change then the outputs from the data source may not change from a previous update for the same version of that data source. Figure 7 shows one scheme for avoiding these redundant updates.

In operation 360A, the update platform may detect a user creating or editing an object. For example, a user may enter a first name, last name, and email address into a leads object. In operation 360B, the update platform may determine if a rule exists for the leads object. If not, the update platform may return to monitoring trigger events.

If a rule exists, the update platform in operation 360C identifies the data source from the rule and compares the object changes with the data source inputs. For example, the data source inputs may include a first and last name. The update platform determines if the first or last name was changed in the record.

When the change in the object corresponds with a data source inputs in operation 360D, the update platform in operation 360E may place a message directed to the data source on a message queue. For example, the update engine may create an API call to the data source that includes the change in the first and/or last name. Otherwise, the update engine may not initiate the API call.

The specific details of the specific aspects of implementations disclosed herein may be combined in any suitable manner without departing from the spirit and scope of the disclosed implementations. However, other implementations may be directed to specific implementations relating to each individual aspect, or specific combinations of these individual aspects. Additionally, while the disclosed examples are often described herein with reference to an implementation in which an on-demand database service environment is implemented in a system having an application server providing a front end for an on-demand database service capable of supporting multiple tenants, the present implementations are not limited to multi-tenant databases or deployment on application servers. Implementations may be practiced using other database architectures, i.e., ORACLE®, DB2® by IBM and the like without departing from the scope of the implementations claimed.

It should also be understood that some of the disclosed implementations can be embodied in the form of various types of hardware, software, firmware, or combinations thereof, including in the form of control logic, and using such hardware or software in a modular or integrated manner. Other ways or methods are possible using hardware and a combination of hardware and software. Additionally, any of the software components or functions described in this application can be implemented as software code to be executed by one or more processors using any suitable computer language such as, for example, Java, C++ or Perl using, for example, existing or object-oriented techniques. The software code can be stored as a computer- or processor-executable instructions or commands on a physical non-transitory computer-readable medium. Examples of suitable media include random access memory (RAM), read only memory (ROM), magnetic media such as a hard-drive or a floppy disk, or an optical medium such as a compact disk (CD) or DVD (digital versatile disk), flash memory, and the like, or any combination of such storage or transmission devices. Computer-readable media encoded with the software/program code may be packaged with a compatible device or provided separately from other devices (for example, via Internet download). Any such computer-readable medium may reside on or within a single computing device or an entire computer system, and may be among other computer-readable media within a system or network. A computer system, or other computing device, may include a monitor, printer, or other suitable display for providing any of the results mentioned herein to a user.

While some implementations have been described herein, it should be understood that they have been presented by way of example only, and not limitation. Thus, the breadth and scope of the present application should not be limited by any of the implementations described herein, but should be defined only in accordance with the following and later-submitted claims and their equivalents.

## Claims

1. A computer program stored on a tangible medium for updating an object in a database system with content from one or more of multiple data sources selected by inputs received from a computing device, the computer program comprising a set of instructions operable to:
receive at the database system from the computing device a selection of a data source from among the multiple data sources to update the object;
receive at the database system from the computing device a selection of one or more trigger events to trigger the update of the object;
cause the database system to monitor for the trigger events associated with the object; and
cause the database system to update the object with content from the data source based on detection by the database system of at least one of the trigger events.

2. The computer program of claim 1, further comprising instructions operable to:
cause the database system to monitor for one of the trigger events associated with creating a record in the object; and
cause the database system to update the record with content from the data source in response to the creating of the record in the object, and/or
comprising instructions operable to:
cause the database system to monitor for one of the trigger events associated with editing a record in the object; and
cause the database system to update the record with content from the data source in response to the editing of the record in the object; and/or
comprising instructions operable to:
cause the database system to monitor a time period associated with one of the trigger events; and
cause the database system to update the object with content from the data source in response detecting the time period; and/or
comprising instructions operable to:
cause the database system to monitor for an on-demand update request associated with one of the triggers; and
cause the database system to update the object with content from the data source in response to the on-demand update request; and/or
comprising instructions operable to:
cause the database system to identify a change in the object;
cause the database system to identify inputs for the data source; and
cause the database system to update the object when the change in the object corresponds to one of the inputs for the data source.

3. The computer program of one of claims 1 or 2, further comprising instructions operable to:
cause the database system to generate a rule associating the object with the trigger events and the data source;
cause the database system to search for the rule in response to detecting the trigger events; and
cause the database system to update the object with content from the data source identified in the rule.

4. The computer program of one of claims 1 to 3, further comprising instructions operable to:
cause the database system to generate an application program interface (API) call to the data source; and
cause the database system to update the object with the content obtained from the API call.

5. The computer program of one of claims 1 to 4, further comprising instructions operable to:
receive at the database system from the computing device a selection of a filter for applying to the object; and
cause the database system to update records in the object associated with the filter with content from the data source.

6. The computer program of one of claims 1 to 5, further comprising instructions operable to:
receive at the database system from the computing device selections of additional objects;
receive at the database system from the computing device selections of the data sources for updating the additional objects;
receive at the database system selection of additional trigger events for the additional objects; and
cause the database system to update the additional objects with content from the selected data sources based on detection by the database system of the additional trigger events for the additional objects.

7. A computing device for updating an object in a database system with content from one or more of multiple data sources selected by inputs received from a user system, comprising:
a processor; and
memory storing one or more stored sequences of instructions which, when executed by the processor, cause the processor to carry out the steps of:
receiving from the user system a selection of an object;
receiving from the user system a selection of a trigger event;
receiving from the user system a selection of at least one data source from among the multiple data sources;
generating a rule identifying the trigger event, the object, and the data source;
accessing the rule in response to detecting the trigger event; and
causing the database system to update the object with content from the data source identified by the rule.

8. The computing device of claim 7, wherein the instructions further cause the processor to carry out the steps of:
receiving from the user system a selection of a filter for assigning to the object; and
causing the database system to update records in the object associated with the filter with content from the data source; and/or
wherein the instructions further cause the processor to carry out the steps of:
identifying inputs for the data source;
detecting changes in the object; and
updating the object when the changes corresponds to at least some of the inputs for the data source.

9. The computing device of claim 7 or 8, wherein the instructions further cause the processor to carry out the steps of:
receiving from the user system selection of additional objects;
receiving from the user system the selection of additional trigger events;
receiving from the user system the selection of different ones of the data sources for updating the additional objects;
generating additional rules identifying the additional objects, the additional trigger events, and the different ones of the data sources for updating the additional objects;
monitoring the additional objects for the additional trigger events identified in the additional rules; and
causing the database system to update the additional objects with the content from the different ones of the data sources identified in the additional rules in response to detecting the additional trigger events.

10. The computing device of claim 9, wherein the instructions further cause the processor to carry out the steps of:
receiving from the user system selections assigning priorities to the different ones of the data sources; and
causing the database system to update the additional objects based on the priorities assigned to the different ones of the data sources.

11. A database system for updating objects with content from data sources based on inputs received from a remote user system, comprising:
a processing unit; and
a memory device coupled to the processing unit, the memory device having instructions stored thereon that, in response to execution by the processing unit, are operable to:
receive from the remote user system selections of the objects identified by an update platform operating within the database system;
receive from the remote user system selections of the data sources identified by the update platform for updating the objects;
detect by the update platform changes to the objects; and
update by the update platform the objects with content from the data sources based on the changes to the objects.

12. The database system of claim 11, further comprising instructions operable to:
receive from the remote user system selections of trigger events identified by the update platform;
monitor by the update platform the objects for the trigger events; and
update by the update platform the objects with content from the data sources in response to detection of the trigger events.

13. The database system of claim 12, further comprising instructions operable to:
identify a first one of the trigger events associated with changing data in the objects;
update the objects in response to detecting the changes in the objects;
identify a second one of the trigger events associated with an on-demand request to update the objects;
update the objects in response to detecting the on-demand request; and
identify a third one of the trigger events associated with a time period for periodically updating the objects; and
update the objects in response to detecting the time period.

14. The database system of one of claims 11 to 13, further comprising instructions operable to:
receive from the remote user system selections assigning priorities to the data sources; and
update the objects based the priorities.

15. The database system of claim 13 or 14, further comprising instructions operable to:
identify with the update platform inputs and outputs for the data sources;
receive from the remote user system selections mapping a first set of fields in the objects to the inputs for the data sources;
receive from the remote user system selections mapping a second set of fields in the objects to the outputs for the data sources;
using the first set of fields as the inputs for the data sources; and
using the outputs for the data sources to update the second set of fields in the objects.
